(19) Europäisches Patentamt
European Patent Office
Office européen des brevets

(11) Veröffentlichungsnummer: **0 138 749**
**B1**

# (12) EUROPÄISCHE PATENTSCHRIFT

(45) Veröffentlichungstag der Patentschrift: **23.08.89**

(21) Anmeldenummer: **84810349.5**

(22) Anmeldetag: **16.07.84**

(51) Int. Cl.⁴: **C 09 B 45/14,** C 08 K 5/16 // C08L77/00 ,(C08K5/16, 5:23, 5:34)

## (54) Verfahren zum Färben synthetischer Polyamide in der Masse.

(30) Priorität: **20.07.83 CH 3968/83**

(43) Veröffentlichungstag der Anmeldung: **24.04.85 Patentblatt 85/17**

(45) Bekanntmachung des Hinweises auf die Patenterteilung: **23.08.89 Patentblatt 89/34**

(84) Benannte Vertragsstaaten: **CH DE FR GB IT LI**

(56) Entgegenhaltungen:
**FR-A-1 117 065**
**FR-A-1 144 432**
**FR-A-1 160 764**

(73) Patentinhaber: **CIBA- GEIGY AG, Klybeckstrasse 141, CH- 4002 Basel (CH)**

(72) Erfinder: **Lienhard, Paul, Dr., Kirschgartenstrasse 14, CH- 4402 Frenkendorf (CH)**
Erfinder: **Saar, Werner, Dr., Dörnliweg 29, CH- 4125 Riehen (CH)**

EP 0 138 749 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

## Verfahren zum Färben synthetischer Polyamide in der Masse

Die vorliegende Erfindung betrifft ein Verfahren zur Massefärbung synthetischer Polyamide sowie das dadurch gefärbte Polyamidmaterial.

Es ist bekannt, dass zur Massefärbung synthetischer Polyamide in dunklen, speziell schwarzen Tönen Russ-Präparate, wie beispielsweise in der GB-PS-1 399 284 beschrieben, verwendet werden können. Nachteilig dabei ist, dass der in der Polyamidschmelze unlösliche Russ das Siebpaket vor der Spinndüse verstopfen kann und ausserdem zur Abrasion der Spinndüse führt.

Es ist ferner bekannt, dass auch Mischungen aus gelben, roten und blauen polymerlöslichen Farbstoffen verwendet werden können, wobei die blaue Komponente meistens ein teures Anthrachinonderivat darstellt.

Weiterhin ist bekannt, dass bestimmte, dunkle Farbnuancen aufweisende Metallkomplexe von Azoverbindungen eingesetzt werden können. Beispiele hierfür sind die 1 : 2-Chromkomplexe von o-Hydroxyazofarbstoffen, wie sie z. B. in der GB-PS-1 055 281 oder in der FR-PS-1 457 695 beschrieben sind. Schliesslich ist in der FR-PS-1 144 432 offenbart, dass sich Chromkomplexe aus Pyrazolonazofarbstoffen, Gemische davon und Chromkomplexmischungen aus einem Pyrazolon- und einem β-Naphtholazofarbstoff sowohl für die Bad- als auch für die Massefärbung verschiedener Substrate, wie z. B. Wolle, Seide, Leder, Polyamid- und Polyurethanfasern, Cellulose-ester und -ether sowie Acetatseide, eignen.

Es wurde nun gefunden, dass zur Schmelzmassefärbung synthetischer Polyamide in dunklen Tönen bestimmte 1 : 2-Chromkomplexe aus einem Pyrazolon- und einem β-Naphtholazofarbstoff besonders geeignet sind.

Die Erfindung betrifft demgemäss ein Verfahren zum Massefärben synthetischer Polyamide, wobei das die Farbstoffe bzw. Farbstoffmischungen enthaltende synthetische Polyamid geschmolzen wird und nach bekannten Verfahren versponnen oder verformt wird, dadurch gekennzeichnet, dass man als Farbstoff entweder Mischungen aus dem 1 : 2-Chromkomplex eines Monoazofarbstoffs der Formel I

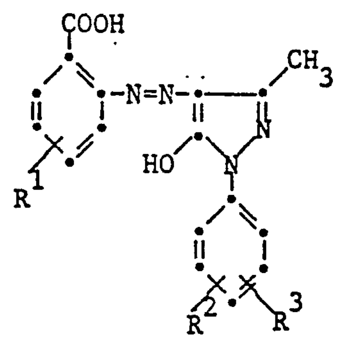

(I) ,

in welcher $R^1$ und $R^3$ unabhängig voneinander -H, -Cl, und $R^2$ -H, $C_1$-$C_4$-Alkyl und/oder -Cl bedeuten, und dem 1 : 2-Chromkomplex eines Monoazofarbstoffs der Formel II

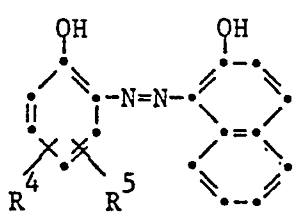

(II),

in welcher $R^4$ -H oder -Cl und $R^5$ -H, -Cl, $-CH_3$, $C_1$-$C_2$-Alkylsulfonyl oder $-SO_2NH_2$ bedeuten, oder aber einen gemischten 1 : 2-Chromkomplex aus je einem Monoazofarbstoff der Formel I und der Formel II verwendet, wobei $R^1$, $R^2$, $R^3$, $R^4$ und $R^5$ die oben angegebene Bedeutung haben.

$R^2$ als $C_1$-$C_4$-Alkyl kann geradkettiges oder verzweigtes Alkyl sein, beispielsweise Methyl, Äthyl, n-Propyl, Isopropyl, n-Butyl, sec-Butyl und tert.-Butyl, insbesonders aber Methyl.

Bevorzugt sind solche Farbstoffmischungen aus den 1 : 2 Chromkomplexen je eines Farbstoffs der Formeln I und II, in welchen $R^1$, $R^3$ und $R^4$ unäbhangig voneinander -H, -Cl, $R^2$ -H, -Cl $-CH_3$ und $R^5$ -H, -Cl, $-CH_3$ oder $-SO_2NH_2$ bedeuten.

Besonders bevorzugt sind solche Farbstoffmischungen aus den Farbstoffen der Formeln I und II, worin $R^1$, $R^2$ und $R^3$ unabhängig voneinander -H, -Cl und $R^4$ und $R^5$ unabhängig voneinander -H, -Cl und $-CH_3$ bedeuten.

Ganz besonders bevorzugt sind diejenigen Farbstoffmischungen, worin in den Formeln I und II $R^1$, $R^2$, $R^3$ und $R^4$ -H und $R^5$ ein in para-Stellung zur HO-Gruppe stehendes Chloratom darstellt.

Die zu verwendenden Farbstoffe der Formeln I und II stellen bekannte Verbindungen dar, welche durch

übliche Diazotierung einer entsprechenden Anthranilsäure bzw. eines Aminophenols und Kupplung der so erhaltenen Diazoverbindung mit einer entsprechenden Methylphenylpyrazolon- bzw. β-Naphthol-Komponente erhalten werden, wobei die Metallisierung des so erhaltenen Azofarbstoffs während seiner Synthese, bevorzugt jedoch nach seiner Synthese durchgeführt wird.

Die erfindungsgemäss in Betracht gezogenen 1 : 2-Chromkomplexe der Formeln I und II können in Form eines Salzes wie beispielsweise des Natrium-, Kalium- oder Ammoniumsalzes oder als freie 1 : 2-Chromkomplexe vorliegen.

Gemischte 1 : 2-Chromkomplexe aus je einem Monoazofarbstoff der Formeln I und II können nach üblichen Methoden hergestellt werden, beispielsweise durch Umsetzung eines Chromsalzes mit einem Gemisch aus einer Verbindung der Formel I und einer Verbindung der Formel II.

Als nicht limitierende Beispiele für Anthranilsäuren und Aminophenole, welche zur Synthese der Farbstoffe der Formeln I und II benötigt werden, seien genannt: Anthranilsäure, 2-Amino-4-chlorbenzoesäure, 2-Aminophenol, 2-Amino-4-chlorphenol, 2-Amino-4,6-dichlorphenol, 2-Amino-4-methyl-phenol, 2-Amino-4-methylsulfonylphenol, 2-Amino-4-äthylsulfonylphenol, oder 2-Amino-4-sulfamoylphenol.

Als Beispiele für Methylphenylpyrazolonderivate seien genannt:

3-Methyl-1-phenyl-2-pyrazolin-5-on,
3-Methyl-1-(2'-chlorphenyl)-2-pyrazolin-5-on,
3-Methyl-1-(3'-chlorphenyl)-2-pyrazolin-5-on,
3-Methyl-1-(4'-chlorphenyl)-2-pyrazolin-5-on,
3-Methyl-1-(2',5'-dichlorphenyl)-2-pyrazolin-5-on,
3-Methyl-1-(2',4'-dichlorphenyl)-2-pyrazolin-5-on,
3-Methyl-1-(3',4'-dichlorphenyl)-2-pyrazolin-5-on,
3-Methyl-1-(4'-methylphenyl)-2-pyrazolin-5-on
3-Methyl-1-(3'-methylphenyl)-2-pyrazolin-5-on
3-Methyl-1-(2'-äthylphenyl)-2-pyrazolin-5-on
3-Methyl-1-(2',4'-dimethylphenyl)-2-pyrazolin-5-on
3-Methyl-1-(3',4'-dimethylphenyl)-2-pyrazolin-5-on
3-Methyl-1-(2'-methyl-5'-chlorphenyl)-2-pyrazolin-5-on
3-Methyl-1-(2'-methyl-3'-chlorphenyl)-2-pyrazolin-5-on
3-Methyl-1-(4'-tert.butylphenyl)-2-pyrazolin-5-on

Die Farbstoffe der Formeln I und II können roh eingesetzt werden, so wie sie bei ihrer Synthese ausfallen. Sie können aber auch falls erforderlich gereinigt werden.

Die erfindungsgemäss verwendeten Farbstoffmischungen enthalten zwischen 10 bis 50 Gew-% 1 : 2-Chromkomplex eines Pyrazolonderivats der Formel I und 90 bis 50 Gew.-% 1 : 2-Chromkomplex eines Naphtholderivats der Formel II, wobei durch Variation dieser Konzentrationsverhältnisse die Einstellung von dunklen Farbnuancen, insbesondere von dunkelbraunen, dunkelvioletten und ganz besonders von schwarzen Tönen, auf einfache Art und Weise ermöglicht wird.

Als synthetische Polyamide kommen für das vorliegende Verfahren die Polyamide in Betracht, wie sie beispielsweise aus ε-Caprolactam (Perlon®, Nylon® 6) aus ω-Aminoundecansäure (Rilsan®), aus Hexamethylendiamin und Adipinsäure (Nylon® 6,6) oder aus analogen Ausgangsstoffen herstellbar sind. Ferner kommen auch Mischpolyamide in Betracht, beispielsweise aus ε-Caprolactam und Hexamethylendiamin und Adipinsäure.

Die erfindungsgemäss in Betracht gezogenen Farbstoffe bzw. Farbstoffgemische werden nach bekannten Verfahren in fester oder flüssiger Form oder als Lösung mit dem Polyamid vermischt und die erhaltene Mischung gegebenenfalls zwischengetrocknet.

Bevorzugt werden die zu färbenden Polyamide in Form von Pulvern, Körnern oder Schnitzeln mit dem trockenen Farbstoffgemisch als Pulver trockenbeschichtet (aufgepudert), d.h. mechanisch derart vermischt, dass die Oberfläche dieser Teilchen mit einer Schicht des Farbstoffgemisches überzogen ist. Das Farbstoffgemisch liegt vorteilhaft in fein verteilter Form vor. Anstelle des reinen Farbstoffgemisches kann man in vielen Fällen mit Vorteil Präparate verwenden, die neben dem Farbstoffgemisch einen thermostabilen und mit Polyamid verträglichen Trägerstoff enthalten, vorzugsweise ein Ca- oder Mg-Salz einer höheren Fettsäure, beispielsweise der Stearin- oder Behensäure, ferner Polyäthylen, Polystyrol, Polyamid, Polyester oder Gemische davon. Derartige Trägerstoffe sind beispielsweise in US-PS-4 093 584, US-PS-4 279 802, GB-PS-1 398 352 und CH-PS-599 322 beschrieben. Diese Präparate in Granulatform können mit ungefärbtem Polyamidgranulat gemischt und weiterverarbeitet werden.

Die das Farbstoffgemisch bzw. das Farbstoffpräparat enthaltenden Polyamidteilchen werden geschmolzen und nach bekannten Verfahren versponnen oder sonstwie, beispielsweise zu Folien oder anderen Formteilen, beispielsweise Spritzgussartikeln (Engineering Plastics), verformt.

Man kann das Farbstoffgemisch, insbesondere das Farbstoffpräparat, auch in fester oder flüssiger Form in das geschmolzene Polyamid vor der Spinndüse zudosieren (Injektionsverfahren) und dieses anschliessend verspinnen bzw. verformen.

Das gefärbte geschmolzene Polyamid zeichnet sich durch einen geringen Anteil ungelöster Partikel aus, so dass die Siebpakete lange Laufzeiten ohne Reinigung aufweisen.

Die Erfindung kann auch dadurch ausgeführt werden, dass man Schnitzel aus synthetischem Polyamid färbt, wobei als Färbebad eine wässerige Lösung oder Dispersion verwendet wird, welche gegebenenfalls mit einem Dispergiermittel stabilisiert ist und einen der erfindungsgemäss in Betracht gezogenen 1 : 2-Chromkomplex-Mischungen enthält. Zur Erhöhung der Aufziehgeschwindigkeit können dem Färbebade auch Zusätze, beispielsweise Salze, wie Ammonium- oder Natriumacetat oder Mononatriumphosphat, oder Säuren wie Ameisensäure zugegeben werden.

Nach gemäss den oben aufgeführten Verfahren erfolgter Färbung der Schnitzel werden diese nach üblicher Methode geschmolzen und zu Fasern oder Fäden verformt. Statt sie zu Fasern oder Fäden zu verformen, besteht auch die Möglichkeit, dass die gefärbten Schnitzel nicht nur zur Herstellung von textilen Gebilden, sondern zur Herstellung gefärbter Spritzgussmassen bzw. Formteilen aller Art (Engineering Plastics) aus Polyamiden verwendet werden.

Die gefärbten Gegenstände enthalten zweckmässig 0,01 bis 3 Gew.-%, bevorzugt 0,5 bis 2 Gew.-% einer Farbstoffmischung aus den erfindungsgemäss in Betracht gezogenen 1 : 2-Chromkomplexen der Farbstoffe der Formeln I und II, wobei diese Farbstoffmischungen zwischen 10 bis 50 Gew.-% 1 : 2-Chromkomplex eines Azofarbstoffes der Formel I und 90 bis 50 Gew.-% 1 : 2-Chromkomplex eines Azofarbstoffes der Formel II enthalten.

Zu den erfindungsgemäss in Betracht gezogenen Farbstoffgemischen können weitere polymerlösliche Chromkomplexfarbstoffe insbesondere zur Nuancierung mitverwendet werden. Zur Einstellung von bestimmten Farbtönen und Farbstärken können solche Farbstoffmischungen in einem polaren Lösungsmittel wie Dimethylformamid gelöst und farbmetrisch kontrolliert werden. Mit pigmentartigen Farbkörpern wie Russ besteht diese Möglichkeit nicht.

Man erhält gleichmässig gefärbte Gegenstände, die sich durch eine hohe Licht-, Shampoo-, Nass- Reib- und insbesonders Thermobeständigkeit, Trocken-Reinigung, und gegebenenfalls ein hohes IR-Remissionsvermögen, durch gute Textileigenschaften wie Reissfestigkeit und Dehnung oder im Falle von Formteilen durch eine gute Formbeständigkeit auszeichnen.

Die erfindungsgemäss in Betracht gezogenen Farbstoffe sind dank ihrer in der Polyamidschmelze guten Löslichkeit und Verteilbarkeit im gefärbten Material gleichmässig und fein verteilt. Obwohl ihre Löslichkeiten in organischen Solventien wie chlorierten Kohlenwasserstoffen, niederen Ketonen, Estern und Alkoholen nicht hoch sind, liegen sie im Polyamid oft in gelöster Form vor.

In den nachfolgenden Beispielen bedeuten die Teile, sofern nichts anderes angegeben wird, Gewichtsteile, die Prozente, Gewichtsprozente, und die Temperaturen sind in Celsiusgraden angegeben.

**Beispiel 1:**

970 Teile Polyamid 6 werden in Granulatform mit 7,5 Teilen des 1 : 2-Chromkomplexes aus dem Farbstoff der Formel (1)

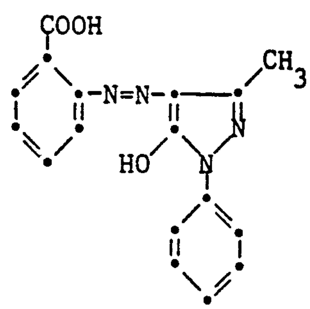

(1)

und 22,5 Teilen des 1 : 2-Chromkomplexes aus dem Farbstoff der Formel (2)

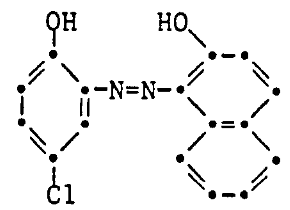

(2)

trocken beschichtet. Das so behandelte Polymer wird bei 280 - 295° C in einem Extruder versponnen. Dabei wird ein schwarzes Fasermaterial erhalten, das sich durch hohe Licht- und Nassechtheiten auszeichnet.

Werden anstelle der 7,5 Teile 3 Teile bzw. 15 Teile des Chromkomplexes aus dem Farbstoff der Formel (1) und anstelle der 22,5 Teile 27 Teile bzw. 15 Teile des Chromkomplexes aus dem Farbstoff der Formel (2) verwendet, so liefert der Spinnprozess bei sonst gleicher Arbeitsweise violett-schwarze bzw. braun-schwarze Polyamid Fasern mit ebenfalls sehr guten Echtheiten.

**Beispiel 2:**

5 Teile des 1 : 2-Cr-Komplexes aus dem Farbstoff der Formel (1) gemäss Beispiel 1 und 15 Teile des 1 : 2-Cr-Komplexes aus dem Farbstoff der Formel (2) gemäss Beispiel 1 werden in 2000 Volumteilen warmem Wasser angeschlämmt, 5 Teile 85 %-ige Ameisensäure sowie 1000 Teile Polyamid 6-Granulat zugegeben und die Mischung unter Rühren zum Sieden erhitzt. Man kocht diese Mischung 2 Stunden, filtriert sie, wäscht das so erhaltene gefärbte Granulat gründlich mit Wasser und trocknet es im Vakuum bei 80° C. Das Verspinnen erfolgt auf einer der üblichen Schmelzspinnapparaturen bei 270 - 275° C. Man erhält textile Fäden von schwarzer Farbe und sehr guter Licht-, Shampoo-, Reib-, Trockenreinigungs- und Trockenhitze-Echtheit.

**Beispiel 3:**

50 Teile eines Farbstoffpräparates in Granulatform bestehend aus 8 % Chromkomplex des Azofarbstoffs der Formel (1) gemäss Beispiel 1, 32 % Chromkomplex des Azofarbstoffs der Formel (2) gemäss Beispiel 1 und 60 % eines linearen Copolyesters(*) aus Terephthalsäure, Isophthalsäure, Äthylenglykol und Neopentylglykol, werden mit 950 Teilen Polyamid 6-Granulat vermischt und bei 280 - 285° C im Extruder versponnen. Der so erhaltene Faden weist eine gleichmässig schwarze Farbe von sehr hoher Licht-, Wasche-, Wasser- und Schweissechtheit auf.

(*): Dynapol L 206® der Firma Dynamit Nobel AG.

**Beispiel 4:**

20 Teile eines Farbstoffpräparates in Granulatform bestehend aus 15 Gew.-% 1 : 2-Chromkomplex des Azofarbstoffs der Formel (1) gemäss Beispiel 1, 35 Gew.-% 1 : 2-Chromkomplex des Azofarbstoffs der Formel (2) gemäss Beispiel 1 und 50 Gew.-% Magnesiumbehenat, werden mit 980 Teilen Polyamid-6-Granulat vermischt und bei 280 - 285° C im Extruder versponnen. Man erhält gleichmässig grau gefärbte Fasern mit hohen Echtheiten, insbesondere Licht- und Nassechtheiten.

**Beispiel 5:**

Verfährt man analog Beispiel 1, verwendet aber anstelle der 1 : 2-Cr-Komplexe aus den Farbstoffen der Formeln (1) und (2) gemäss Beispiel 1 solche Komplexe aus den in Tabelle 1, Kolonne 2 und 3 angegebenen Farbstoffen A bzw. B, so erhält man ebenfalls sehr echte schwarze Ausfärbungen.

**Tabelle 1**

| Beispiel Nr. | 1 : 2-Cr-Komplex aus dem Farbstoff A | 1 : 2-Cr-Komplex aus dem Farbstoff B |
|---|---|---|
| 5 | 2-Aminobenzoesäure → 1-(2'-Chlorphenyl)-3-methyl-pyrazolin-5-on | 2-Amino-4-chlorphenol → 2-Naphtol |
| 6 | 2-Aminobenzoesäure → 1-(2',5'-Dichlorphenyl)-3-methyl-pyrazolin-5-on | 2-Amino-4-chlorphenol → 2-Naphtol |
| 7 | 2-Aminobenzoesäure → 1-(2'-Äthylphenyl)-3-methyl-pyrazolin-5-on | 2-Amino-4-chlorphenol → 2-Naphtol |
| 8 | 2-Amino-4-chlor-benzoesäure → 1-Phenyl-3-methyl-pyrazolin-5-on | 2-Amino-4-chlorphenol → 2-Naphtol |
| 9 | 2-Aminobenzoesäure → 1-Phenyl-3-methyl-pyrazolin-5-on | 2-Amino-5-methylsulfonyl-phenol → 2-Naphtol |
| 10 | 2-Aminobenzoesäure → 1-Phenyl-3-methyl-pyrazolin-5-on | 2-Amino-4-sulfamoylphenol → 2-Naphtol |
| 11 | 2-Aminobenzoesäure → 1-Phenyl-3-methyl-pyrazolin-5-on | 2-Amino-4-methylphenol → 2-Naphtol |
| 12 | 2-Aminobenzoesäure → 1-Phenyl-3-methyl-pyrazolin-5-on | 2-Amino-4,6-dichlorphenol → 2-Naphtol |
| 13 | 2-Aminobenzoesäure → 1-Phenyl-3-methyl-pyrazolin-5-on | 2-Aminophenol → 2-Naphthol |
| 14 | 2-Aminobenzoesäure → 1-Phenyl-2-methyl-pyrazolin-5-on | 2-Amino-4-äthylsulfonyl-phenol → 2-Naphthol |
| 15 | 2-Aminobenzoesäure → 1-(4'-tert.Butylphenyl)-3-methyl-pyrazolin-5-on | 2-Amino-4-chlorphenol → 2-Naphthol |

**Beispiel 6:**

In 600 Vol.-teilen n-Butanol werden 19,3 Teile Farbstoff der Formel (1) gemäss Beispiel 1, 26,9 Teile Farbstoff der Formel (2) gemäss Beispiel 1 und 42 Teile $CrCl_3 \cdot 6H_2O$ angeschlämmt, die Suspension erhitzt und unter Abtrennung des freigesetzten Wassers so lange gekocht bis die Farbstoffe vollständig umgesetzt sind (DC-Nachweis). Man lässt die Temperatur auf 80°C fallen, gibt zur Reaktionsmischung weitere 44,8 Teile Farbstoff der Formel (2) gemäss Beispiel 1 sowie 7,5 Vol.-Teile Wasser und 44,4 Teile Soda und kocht das Ganze wie vorher, bis auch die neue Portion Farbstoff vollständig metallisiert ist. Die heisse Suspension wird filtriert, der Rückstand mit n-Butanol gewaschen das Filtrat zur Trockne eingedampft und das so erhaltene Produkt bei 100 - 110°C im Vakuum bis zur Gewichtskonstanz nachgetrocknet. Es liegt ein Gemisch des asymmetrischen Komplexes der nachstehenden Formel (III) und der beiden symmetrischen 1 : 2 Cr-Komplexe aus dem Farbstoff der Formel (1) und dem Farbstoff der Formel (2) gemäss Beispiel 1 als Pulver vor:

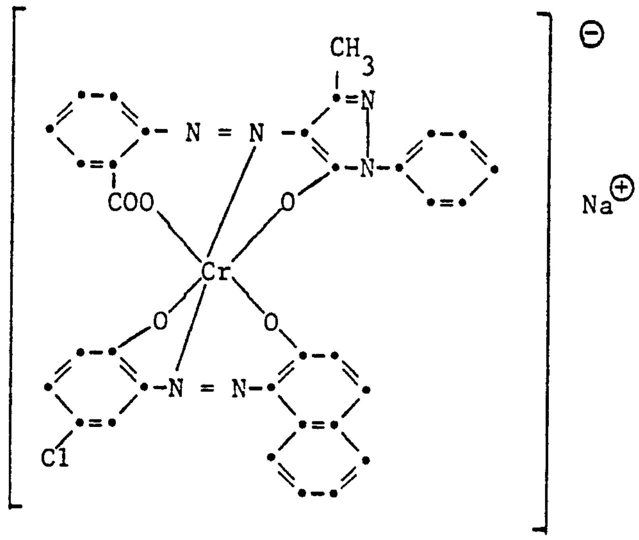

(III)

20 Teile des so erhaltenen Farbstoffgemisches werden mit 980 Teilen Polyamid-6-Granulat gründlich vermischt und in einem Extruder bei 270 - 280°C versponnen. Es entstehen gleichmässig schwarz gefärbte Fasern mit sehr guten Echtheiten insbesondere Reib-, Licht- und Trockenhitzeechtheit. Die Farbstoffe sind im Polymer gelöst.

## Patentansprüche

1. Verfahren zum Massefärben synthetischer Polyamide, wobei das die Farbstoffe bzw. Farbstoffmischungen enthaltende synthetische Polyamid geschmolzen und nach bekannten Verfahren versponnen oder verformt wird, dadurch gekennzeichnet, dass man als Farbstoff entweder Mischungen aus dem 1 : 2-Chromkomplex eines Monoazofarbstoffs der Formel I

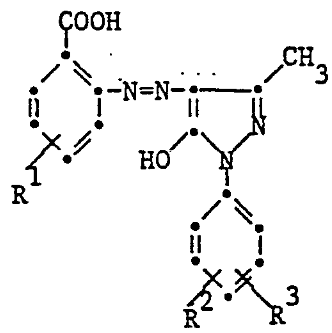

(I) ,

in welcher $R^1$ und $R^3$ unabhängig voneinander -H, -Cl, und $R^2$ -H, $C_1$-$C_4$-Alkyl und/oder -Cl bedeuten, und dem 1: 2-Chromkomplex eines Monoazofarbstoffs der Formel II

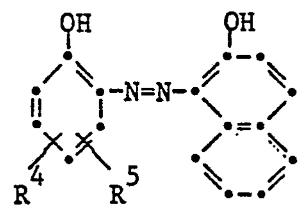

(II),

in welcher $R^4$ -H oder -Cl und $R^5$ -H, -Cl, $-CH_3$, $C_1$-$C_2$-Alkylsulfonyl oder $-SO_2NH_2$ bedeuten, oder aber einen gemischten
1 : 2-Chromkomplex aus je einem Monoazofarbstoff der Formel I und der Formel II verwendet, wobei $R^1$, $R^2$, $R^3$, $R^4$ und $R^5$ die oben angegebene Bedeutung haben.

2. Verfahren gemäss Anspruch 1, dadurch gekennzeichnet, dass in den Formeln I und II $R^1$, $R^3$ und $R^4$ unabhängig voneinander -H, -Cl, $R^2$ -H, -Cl, $-CH_3$ und $R^5$ -H, -Cl, $-CH_3$ oder $-SO_2NH_2$ bedeuten.

3. Verfahren gemäss Anspruch 1, dadurch gekennzeichnet, dass in den Formeln I und II $R^1$, $R^2$ und $R^3$ unabhängig voneinander -H, -Cl und $R^4$ und $R^5$ unabhängig voneinander -H, -Cl und $-CH_3$ bedeuten.

4. Verfahren gemäss Anspruch 1, dadurch gekennzeichnet, dass in den Formeln I und II $R^1$, $R^2$, $R^3$ und $R^4$ -H und $R^5$ ein in para-Stellung zur HO-Gruppe stehendes Chloratom darstellt.

5. Verfahren gemäss Anspruch 1, dadurch gekennzeichnet, dass man 0,01 bis 3 Gew.-%, bezogen auf das zu färbende synthetische Polyamid, einer Farbstoffmischung aus den 1 : 2-Chromkomplexen der Azofarbstoffe der Formeln I und II verwendet.

6. Verfahren gemäss Anspruch 1, dadurch gekennzeichnet, dass die Farbstoffmischungen zwischen 10 bis 50 Gew.-% 1 : 2-Chromkomplex eines Azofarbstoffs der Formel I und 90 bis 50 Gew.-% 1 : 2-Chromkomplex eines Azofarbstoffs der Formel II enthält.

7. Verfahren gemäss Anspruch 1, dadurch gekennzeichnet, dass man zusätzlich noch weitere polymerlösliche Chromkomplexfarbstoffe mitverwendet.

8. Verfahren gemäss Anspruch 1 zur Einstellung von schwarzen Tönen.

## Claims

1. A process for mass-colouring synthetic polyamide, in which the synthetic polyamide containing the dyes or dye mixtures is melted and the melt is spun or shaped using known methods, which comprises using as dye either mixtures of the 1 : 2 chromium complex of a monoazo dye of the formula I

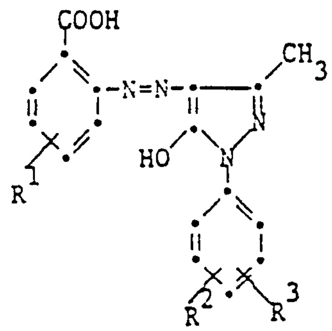

(I)

in which $R^1$ and $R^3$, independently of each other, are each -H or -Cl, and $R^2$ is H, $C_1$ - $C_4$alkyl and/or Cl, and the 1 : 2 chromium complex of a monoazo dye of the formula II

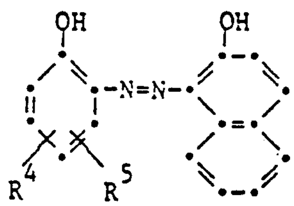

(II)

in which $R^4$ is -H or -Cl, and $R^5$ is -H, -Cl, $-CH_3$, $C_1$-$C_2$-alkylsulfonyl or $-SO_2NH_2$, or a mixed 1 : 2 chromium complex of a monoazo dye each of the formula I and the formula II in which $R^1$, $R^2$, $R^3$, $R^4$ and $R^5$ are as defined above.

2. A process according to claim 1, wherein, in the formulae I and II, $R^1$, $R^3$ and $R^4$, independently of each other, are each -H or -Cl, $R^2$ is -H, -Cl or $-CH_3$, and $R^5$ is -H -Cl, $-CH_3$ or $-SO_2NH_2$.

3. A process according to claim 1, wherein, in the formulae I and II, $R^1$, $R^2$ and $R^3$, independently of one another, are each -H or -Cl, and $R^4$ and $R^5$, independently of each other, are each -H, -Cl or $-CH_3$.

4. A process according to claim 1, wherein, in the formulae and II, $R^1$, $R^2$, $R^3$ and $R^4$ are each -H, and $R^5$ is a chlorine atom in para-position relative to the HO group.

5. A process according to claim 1, wherein 0.01 to 3 % by weight of the synthetic polyamide to be coloured is used of a dye mixture of the 1 : 2 chromium complexes of the azo dyes of the formulae I and II.

6. A process according to claim 1, wherein the dye mixtures contain between 10 to 50 % by weight of the 1 : 2 chromium complex of an azo dye of the formula I and 90 to 50 % by weight of the 1 : 2 chromium complex of an azo dye of the formula II

7. A process according to claim 1, wherein further polymer-soluble chromium complex dyes are used in addition.

8. A process according to claim 1, for matching black shades.

**Revendications**

1. Procédé pour teindre des polyamides synthétiques dans la masse, le polyamide synthétique qui contient les colorants ou les mélanges de colorants étant fondu et étant filé ou moulé par des méthodes connues, procédé caractérisé en ce qu'on utilise, comme colorants, soit des mélanges du complexe de chrome 1 : 2 d'un colorant mono-azoïque répondant à la formule I:

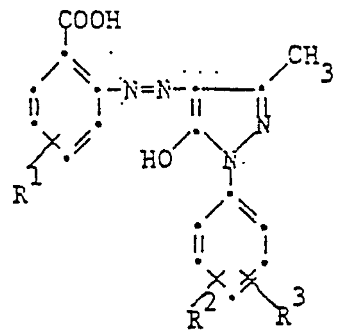

(I)

dans laquelle:

$R^1$ et $R^3$ représentent chacun, indépendamment l'un de l'autre, -H ou -Cl, et

$R^2$ représente -H, un alkyle en $C_1$-$C_4$ et/ou -Cl, et du complexe de chrome 1 : 2 d'un colorant mono-azoïque répondant à la formule II:

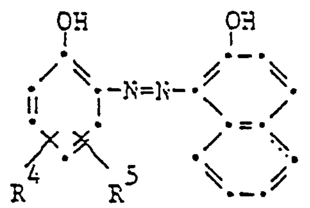

(II)

dans laquelle :

$R_4$ représente -H ou -Cl et

$R^5$ représente -H, -Cl, $-CH_3$, un alkylsulfonyle en $C_1$ ou $C_2$ ou un radical $-SO_2NH_2$,

soit un complexe de chrome 1 : 2 mixte dérivant d'un colorant mono-azoïque de formule I et d'un colorant mono-azoïque de formule II, dans lesquels $R^1$, $R^2$, $R^3$, $R^4$ et $R^5$ ont les significations indiquées ci-dessus.

2. Procédé selon la revendication 1 caractérisé en ce que, dans les formules I et II, les symboles $R^1$, $R^3$ et $R^4$ représentent chacun, indépendamment les uns des autres, -H ou -Cl, $R^2$ représente -H, -Cl ou $-CH_3$, et $R^5$ représente -H, -Cl, $-CH_3$ ou $-SO_2NH_2$.

3. Procédé selon la revendication 1 caractérisé en ce que, dans les formules I et II, les symboles $R^1$, $R^2$ et $R^3$ représentent chacun, indépendamment les uns des autres, -H ou -Cl, et $R^4$ et $R^5$ représentent chacun, indépendamment l'un de l'autre, -H, -Cl ou $-CH_3$.

4. Procédé selon la revendication 1 caractérisé en ce que, dans les formules I et II, $R^1$, $R^2$, $R^3$ et $R^4$ représentent chacun -H, et $R^5$ représente un atome de chlore qui se trouve en position para relativement au radical -OH.

5. Procédé selon la revendication 1 caractérisé en ce qu'on utilise de 0,01 à 3 % en poids, par rapport au polyamide synthétique à teindre, d'un mélange de colorants constitué des complexes de chrome 1 : 2 dérivant des colorants azoïques de formules I et II.

6. Procédé selon la revendication 1 caractérisé en ce que les mélanges de colorants contiennent de 10 à 50 % en poids du complexe de chrome 1 : 2 d'un colorant azoïque de formule I et de 90 à 50 % en poids du complexe de chrome 1 : 2 d'un colorant azoïque de formule II.

7. Procédé selon la revendication 1 caractérisé en ce qu'on utilise en outre d'autres colorants complexes du chrome qui sont solubles dans les polymères.

8. Procédé selon la revendication 1 appliqué à la mise au point de nuances noires.